# EUROPEAN PATENT APPLICATION

(11) **EP 4 549 148 A1**
(43) Date of publication of application: **07.05.2025**
(21) Application number: 23831895.0
(22) Date of filing: 28.06.2023
(51) Int. Cl.: B32B 27/10, B32B 27/18, B32B 7/022, B32B 27/32

(54) **ECO-FRIENDLY LAMINATE AND PACKAGING MATERIAL COMPRISING SAME**

(30) Priority: 30.06.2022 KR 20220080818; 09.11.2022 KR 20220148889
(71) Applicant: CJ CheilJedang Corporation, Seoul 04560 (KR)
(72) Inventor: KIM, Ji Hun, Seoul 04560 (KR); SHIM, Yoo-Kyoung, Seoul 04560 (KR); YOON, Ki Chull, Seoul 04560 (KR)
(74) Representative: Dehns
(86) International application number: PCT/KR2023/009015
(87) International publication number: WO 2024/005536

(57) **Abstract**

The present disclosure relates to an eco-friendly laminate and a packaging material comprising same. More specifically, a laminate, according to one embodiment of the present invention, comprises: a paper layer; and a film layer, thereby having high recyclability, easily being decomposed in soil and the ocean, and having excellent barrier properties against oxygen and/or moisture, sealing properties, and the like.

## Description

### Technical Field

The present disclosure relates to an environmentally friendly laminate that can be used as a packaging material in various fields since it is highly biodegradable in the ocean and soil and thus has excellent environmental friendliness, as well as excellent barrier properties against oxygen and/or moisture and sealing properties.

### Background Art

Conventionally, in order to secure functionality as a packaging material, a packaging material was manufactured by laminating multiple resin layers composed of petrochemical-based synthetic resins. However, as different petrochemical-based synthetic resins are used, the recyclability of packaging materials is deteriorated, and their separate disposal is limited. In addition, as aluminum foil or an aluminum-deposited resin layer is adopted to increase barrier properties against oxygen and/or moisture, it is almost impossible to separately dispose of the packaging materials.

In order to solve this problem, a packaging material manufactured using paper and biodegradable raw materials has been proposed. However, these packaging materials have a problem in that the raw materials are decomposed only under specific conditions. In addition, in order to increase barrier properties against oxygen and/or moisture, packaging materials have been manufactured by coating metallic materials instead of aluminum or introducing barrier materials such as EVOH, PVA, and PVDC. Since they are not decomposed well in the ocean and soil, this cannot be a fundamental countermeasure to solve separate disposal and marine pollution caused by plastic.

Thus, paper packaging materials in which paper and a biodegradable film are bonded are being developed in order to increase the recyclability and marine biodegradability of packaging materials. However, paper packaging materials developed up to the present do not significantly improve recyclability because the content of the biodegradable film is greater than the content of the paper. In addition, if the biodegradable film is not coated to secure barrier properties against oxygen and moisture, there is a limit to its use as an industrial packaging material for foods and cosmetics that require long-term storage.

Accordingly, there is a need to develop packaging materials with improved recyclability and enhanced performance while being well decomposed in the ocean and soil.

### [Prior Art Document]

### [Patent Document]

(Patent Document 1) Korean Laid-open Patent Publication No. 2021-0008466

### Disclosure of Invention

### Technical Problem

The present disclosure aims to provide a laminate that has excellent recyclability, is well decomposed in the ocean and soil, and is excellent in barrier properties (gas barrier properties) against oxygen and/or moisture and in sealing properties.

In addition, the present disclosure aims to provide a packaging material comprising the laminate.

### Solution to Problem

According to an aspect of the present disclosure to accomplish the above object, there is provided a laminate, which comprises a paper layer; and a film layer, wherein the paper layer has a biocarbon content of 85% or more and a tensile strength of 8 MPa or more, the film layer comprises polyhydroxyalkanoate (PHA) and has a thickness of 8 to 70 µm, the polyhydroxyalkanoate (PHA) is a homopolymer comprising a repeat unit derived from a monomer selected from the group consisting of 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO), or a copolymer comprising at least one repeat unit derived from a monomer selected from the group consisting of 3-hydroxybutyrate (3HB), 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO), the at least one repeat unit is employed in an amount of 0.1 to 50% by weight, and the thickness of the film layer is less than 75% of the total thickness of the laminate.

In an embodiment, the polyhydroxyalkanoate (PHA) may be a copolymer, which comprises a first repeat unit and a second repeat unit, each being derived from a monomer selected from the group consisting of 3-hydroxybutyrate (3HB), 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO), and the first repeat unit and the second repeat unit are different from each other.

In another embodiment, the polyhydroxyalkanoate (PHA) may be a copolymer comprising 0.1 to 50% by weight of the first repeat unit or the second repeat unit based on the total weight of the polyhydroxyalkanoate (PHA).

In another embodiment, the polyhydroxyalkanoate (PHA) may be a copolymer, which comprises 50 to 99.9% by weight of the first repeat unit derived from 3-hydroxybutyrate (3HB) and 0.1 to 50% by weight of the second repeat unit derived from a monomer selected from the group consisting 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO).

In another embodiment, the film layer may have a biocarbon content of 40% or more.

In another embodiment, the film layer may have a tensile strength of 5 MPa or more and a seal strength of 0.5 kgf or more.

In another embodiment, the film layer may further comprise at least one selected from the group consisting of polylactic acid (PLA), polybutylene adipate terephthalate (PBAT), polybutylene succinate (PBS), thermoplastic starch (TPS), polyvinyl alcohol (PVA), polycaprolactone (PCL), bio-derived polyethylene, and bio-derived polypropylene.

In another embodiment, the polyhydroxyalkanoate (PHA) may be a poly(3-hydroxybutyrate-co-4-hydroxybutyrate) copolymer.

In another embodiment, the polyhydroxyalkanoate (PHA) may have an average molecular weight of 30,000 to 1,000,000 g/mol.

In another embodiment, the paper layer may have a tensile strength of 8 to 100 MPa, a tear strength of 20 to 600 gf, and a basis weight of 30 to 350 g/m².

In another embodiment, the laminate may have a peel strength of 200 gf or more.

In another embodiment, the laminate may have a total biocarbon content of 25% or more.

In another embodiment, the laminate may have an oxygen transmission rate of 1 to 1,200 cc/m²·day and a water vapor transmission rate of 1 to 150 g/m²·day.

According to another aspect of the present disclosure, there is provided a packaging material comprising the laminate.

### Advantageous Effects of Invention

Since the laminate according to the present disclosure comprises a paper layer and a film layer having optimized physical properties (e.g., tensile strength, tear strength, and the like), along with a biocarbon content within a specific range, it has high recyclability, is readily decomposed in the ocean and soil, and may have excellent barrier properties against oxygen and/or moisture (gas barrier properties) and sealing properties even though it does not comprise a conventional barrier layer.

Accordingly, the laminate according to the present disclosure can be advantageously used as a packaging material for foods, medicines, cosmetics, and industrial products for maintaining a packaging state for a long period of time, as well as a disposable packaging material for maintaining a packaging state for a short period of time.

### Brief Description of Drawings

Fig. 1 is a cross-sectional view showing a laminate according to an embodiment of the present disclosure.
Fig. 2 is a cross-sectional view showing another laminate according to an embodiment of the present disclosure.

### Best Mode for Carrying out the Invention

Hereinafter, the present disclosure will be described with reference to embodiments. Here, the present disclosure is not limited to the disclosures given below, but it may be modified into various forms as long as the gist of the invention is not changed.

In the present specification, in the case where an element is mentioned to be formed, connected, or combined on or under another element, it means all of the cases where one element is directly, or indirectly through another element, formed, connected, or combined with another element. In addition, it should be understood that the criterion for the terms on and under of each component may vary depending on the direction in which the object is observed.

In the present specification, the term "comprising" is intended to specify a particular characteristic, region, step, process, element, and/or component. It does not exclude the presence or addition of any other characteristic, region, step, process, element and/or component, unless specifically stated to the contrary.

All numbers and expressions related to the quantities of components, reaction conditions, and the like used herein are to be understood as being modified by the term "about" unless otherwise indicated.

The present disclosure relates to a laminate, which comprises a paper layer and a film layer having optimized physical properties, along with a biocarbon content within a specific range and a packaging material comprising the same, which will be described in detail as follows.

### Laminate

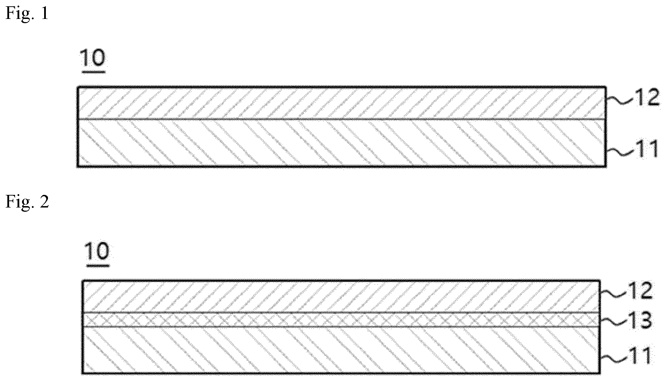

The laminate according to the present disclosure comprises a paper layer and a film layer, which will be described in detail with reference to Fig. 1, as follows.

### Paper layer

The laminate (10) according to an embodiment of the present disclosure comprises a paper layer (11). The paper layer (11) serves as a substrate for forming a film layer (12) and a printing layer in the laminate (10) while securing the mechanical strength of the laminate (10).

The paper layer (11) may be formed of a paper substrate (paper) made of mechanical pulp, semi-chemical pulp, or chemical pulp. The paper substrate may specifically comprise at least one selected from the group consisting of white paper (imitation vellum), off-white paper, colored paper, coarse paper, heavy paper, pile paper, art paper, snow paper, snow white paper, single-sided art paper, royal art paper, NCR paper, leather paper, laid paper, CCP paper, Kraft paper, Manila ivory paper, royal ivory paper, tracing paper, tant paper, fancy paper, cotton paper, label paper, white board paper, photo paper, and cup paper.

The paper layer (11) may have a biocarbon content (renewable carbon content (carbon ratio)) of 85% (85 percent modem carbon (pMC)) or more. Specifically, the paper layer (11) may have a biocarbon content of 85 to 100%, 85 to 99%, 85 to 95%, or 90 to 95%. As the biocarbon content of the paper layer (11) is within the above range, the emission of carbon dioxide from the laminate (10) can be minimized. Here, the biocarbon content may refer to a value measured according to ASTM D6866.

The paper layer (11) may have a tensile strength of 8 MPa or more. Specifically, the tensile strength of the paper layer (11) may be 8 to 100 MPa, 20 to 90 MPa, 30 to 80 MPa, 40 to 70 MPa, or 50 to 60 MPa. As the tensile strength of the paper layer (11) is within the above range, it has the mechanical strength and stiffness necessary for the processing, so that the processability and manufacturing efficiency of the laminate (10) can be enhanced. Here, the tensile strength may refer to a value measured according to ASTM D882.

The paper layer (11) may have a tear strength of 20 to 600 gf. Specifically, the tear strength of the paper layer (11) may be 50 to 600 gf, 100 to 450 gf, 150 to 300 gf, 180 to 280 gf, or 200 to 250 gf. As the tear strength of the paper layer (11) is within the above range, it is possible to prevent the paper layer (11) from being torn or having poor cutability during the processing of the laminate (10). In addition, at the time when a packaging material obtained from the laminate (10) is opened, the packaging material can be well opened without tools.

Here, the tear strength may refer to a value measured according to TAPPI method 414 om-98.

The paper layer (11) may have a basis weight of 30 to 350 g/m². Specifically, the basis weight of the paper layer (11) may be 50 to 330 g/m², 100 to 320 g/m², 150 to 310 g/m², 200 to 300 g/m², or 250 to 290 g/m². As the basis weight of the paper layer (11) is within the above range, it is possible to secure the mechanical strength of the laminate (10).

The paper layer (11) may have a density of 0.6 to 1.2 g/cm³. Specifically, the density of the paper layer (11) may be 0.7 to 1.2 g/cm³, 0.8 to 1.2 g/cm³, or 0.9 to 1.1 g/cm³.

The paper layer (11) may account for 50% by weight or more of the total weight of the laminate (10). Specifically, the content of the paper layer (11) may be 50 to 95% by weight, 55 to 95% by weight, 55 to 85% by weight, 60 to 80% by weight, or 65 to 75% by weight, based on the total weight of the laminate (10). As the content of the paper layer (11) is within the above range, the laminate (10) can be separately disposed of as paper, so that the recyclability of the laminate (10) can be excellent.

In addition, the thickness of the paper layer (11) is 50% or more of the total thickness of the laminate (10). Specifically, it may be 60% or more, 70% or more, 80% or more, or 90% or more (for example, 30 to 99%, 40 to 99%, 50 to 97%, 60 to 95%, or 70 to 93%). More specifically, the thickness of the paper layer (11) may be 25 to 500 µm, 40 to 450 µm, 50 to 400 µm, 80 to 380 µm, or 100 to 360 µm.

Meanwhile, the paper layer (11) may comprise a functional coating layer as needed. Specifically, if the laminate (10) requires more high barrier properties, thermal insulation properties, and high strength, a functional coating layer formed from a coating composition comprising at least one selected from the group consisting of graphene oxide, clay, montmorillonite, cyclodextrin, nanocellulose, aluminum (Al), cellulose, silicon oxide (SiOₓ), and aluminum oxide (Al₂O₃) may be formed on one or both sides of the paper layer (11).

In addition, in order to increase adhesion properties with the film layer (12) and gas barrier properties of the laminate (10), the paper layer (11) may further comprise a primer layer formed from a primer composition comprising a water-soluble resin such as polyvinyl alcohol (PVOH); or a composition comprising at least one of an ethylene vinyl acetate-based resin, a polyurethane-based resin, and an acryl-based resin.

### Film layer

The laminate (10) according to an embodiment of the present disclosure comprises a film layer (12). The film layer (12) serves to enhance the gas barrier properties, sealing properties, and biodegradability of the laminate (10).

The film layer (12) may comprise polyhydroxyalkanoate (PHA). Specifically, the film layer (12) may be composed of polyhydroxyalkanoate (PHA) alone or may further comprise a biodegradable resin in addition to polyhydroxyalkanoate (PHA). The biodegradable resin may be specifically at least one selected from the group consisting of polylactic acid (PLA), polybutylene adipate terephthalate (PBAT), polybutylene succinate (PBS), thermoplastic starch (TPS), polyvinyl alcohol (PVA), and polycaprolactone (PCL). As the film layer (12) selectively further comprises the biodegradable resin while comprising polyhydroxyalkanoate (PHA), the biodegradability of the laminate (10) in the ocean and soil may be excellent since it is well decomposed by microorganisms. In particular, since the film layer (12) essentially comprises polyhydroxyalkanoate (PHA), which is decomposed more quickly by microorganisms, it can have a faster biodegradation rate.

In addition, if it is desired to achieve an object of reducing the emission of carbon dioxide while achieving mechanical properties along with biodegradability, the film layer (12) may further comprise at least one of bio-derived polyethylene (bio-PE) and bio-derived polypropylene (bio-PP) in addition to polyhydroxyalkanoate (PHA).

Specifically, the film layer (12) may comprise polyhydroxyalkanoate (PHA) and polylactic acid (PLA). In such an event, the weight ratio of polyhydroxyalkanoate (PHA) and polylactic acid (PLA) employed in the film layer (12) may be 1:9 to 9:1, specifically, 2:8 to 8:2, 2.5:7.5 to 7.5:2.5, 3:7 to 7:3, 3.5:6.5 to 6.5:3.5, or 4:6 to 6:4. As the weight ratio is within the above range, the biodegradability of the laminate (10) can be increased while the seal strength and tensile strength of the film layer (12) is secured at a required level.

Polyhydroxyalkanoate (PHA) employed in the film layer (12) may be prepared (synthesized) through a known method using microorganisms while it may be polyhydroxyalkanoate (PHA) in which the content of repeat units derived from monomers is controlled within a specific range. Specifically, the polyhydroxyalkanoate (PHA) may be a homopolymer obtained by using one monomer as a reactant or a copolymer obtained by using two or more monomers as a reactant.

More specifically, the polyhydroxyalkanoate (PHA) may be a homopolymer comprising a repeat unit derived from a monomer selected from the group consisting of 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO), or a copolymer comprising at least one repeat unit (A) derived from a monomer selected from the group consisting of 3-hydroxybutyrate (3HB), 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO).

If the polyhydroxyalkanoate (PHA) is a copolymer comprising the repeat unit (A), the content of the repeat unit (A) may be 0.1 to 50% by weight (specifically, 2 to 45% by weight, 4 to 43% by weight, 6 to 40% by weight, or 8 to 35% by weight) based on the total weight of the polyhydroxyalkanoate (PHA). As the content of the repeat unit (A) is within the above range, melt extrusion coating and film processing in which a polymer resin is melted by heat may be possible. That is, if the content of the repeat unit (A) exceeds 50% by weight, the melt strength of a molten resin (a PHA resin) is low, making it difficult to enhance the processing speed or difficult to form it into a laminate (laminated film). In addition, if the content of the repeat unit (A) is less than 0.1% by weight, crystallinity is too high, making it difficult to achieve the mechanical properties required for a packaging material.

Specifically, the polyhydroxyalkanoate (PHA) may be a copolymer comprising a first repeat unit (B) derived from a monomer selected from the group consisting of 3-hydroxybutyrate (3HB), 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO); and a second repeat unit (C) derived from a monomer selected from the group consisting of 3-hydroxybutyrate (3HB), 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO), respectively, wherein the first repeat unit (B) and the second repeat unit (C) are different from each other.

If the polyhydroxyalkanoate (PHA) is a copolymer comprising the first repeat unit (B) and the second repeat unit (C), the contents of these repeat units are not particularly limited, but the content of the first repeat unit (B) or the second repeat unit (C) may be 0.1 to 50% by weight (specifically, 2 to 45% by weight, 4 to 43% by weight, 6 to 40% by weight, or 8 to 35% by weight) based on the total weight of the polyhydroxyalkanoate (PHA).

More specifically, the polyhydroxyalkanoate (PHA) may be a copolymer comprising a first repeat unit (D) derived from 3-hydroxybutyrate (3HB); and a second repeat unit (E) derived from a monomer (comonomer) selected from the group consisting 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO).

If the polyhydroxyalkanoate (PHA) is a copolymer comprising the first repeat unit (D) and the second repeat unit (E), the contents of these repeat units are not particularly limited, but the content of the second repeat unit (E) may be 0.1 to 50% by weight, and, therefore, the content of the first repeat unit (E) may be 50 to 99.9% by weight, based on the total weight of the polyhydroxyalkanoate (PHA). As the contents of the first repeat unit (D) and the second repeat unit (E) are each within the above ranges, it is possible to increase the formability into a laminate and to secure the mechanical properties required as a packaging material. Specifically, the content of the first repeat unit (D) may be 55 to 98% by weight, 57 to 96% by weight, 60 to 94% by weight, or 65 to 92% by weight, based on the total weight of the polyhydroxyalkanoate (PHA). In addition, the content of the second repeat unit (E) may be 2 to 45% by weight, 4 to 43% by weight, 6 to 40% by weight, or 8 to 35% by weight, based on the total weight of the polyhydroxyalkanoate (PHA).

As an example, the polyhydroxyalkanoate (PHA) may be a poly(3-hydroxybutyrate-co-4-hydroxybutyrate) (Poly(3HB)-co-(4HB)) copolymer. As another example, the polyhydroxyalkanoate (PHA) may be a poly(3-hydroxybutyrate-co-3-hydroxyvalerate) (Poly(3HB)-co-(3HV)) copolymer.

The polyhydroxyalkanoate (PHA) may have an average molecular weight of 30,000 to 1,000,000 g/mol, specifically, 80,000 to 900,000 g/mol, 150,000 to 850,000 g/mol, or 250,000 to 750,000 g/mol. If the average molecular weight of the polyhydroxyalkanoate (PHA) is less than 30,000 g/mol, the low molecular weight makes it difficult to achieve the required seal strength and tensile strength when it is processed into a laminate (laminated film), or the fast degradation rate makes it difficult to be used as a packaging material. In addition, if the average molecular weight of the polyhydroxyalkanoate (PHA) exceeds 1,000,000 g/mol, the viscosity of a molten resin (a PHA resin) is too high, making it difficult to be processed with an extruder.

In addition, the polyhydroxyalkanoate (PHA) may have a melt flow index (MFI) of 0.1 to 40 g/10 minutes when measured at 165°C and 5 kg. Specifically, it may be 0.5 to 25 g/10 minutes, 1 to 15 g/10 minutes, or 2 to 10 g/10 minutes. If the melt flow index of polyhydroxyalkanoate (PHA) is less than 0.1 g/10 minutes, the viscosity of a molten resin is too high, making it difficult to be extrusion-coated, or the neck-in is too large, thereby deteriorating workability. In addition, if the melt flow index of polyhydroxyalkanoate (PHA) exceeds 40 g/10 minutes, the melt strength of a molten resin is too low, making it difficult to be processed into a laminate (laminated film).

The film layer (12) comprising polyhydroxyalkanoate (PHA) may further comprise a synthetic resin as needed. Specifically, when high barrier properties of the laminate (10) are required, the film layer (12) may further comprise at least one synthetic resin such as ethylene vinyl alcohol (EVOH), polyvinyl chloride (PVC), or polyvinylidene chloride (PVDC).

Meanwhile, the film layer (12) may have a biocarbon content (renewable carbon content (carbon ratio)) of 40% (40 percent modem carbon (pMC)) or more. Specifically, the film layer (12) may have a biocarbon content of 40 to 100%, 50 to 95%, 60 to 90%, or 70 to 85%. As the biocarbon content of the film layer (12) is within the above range, the emission of carbon dioxide from the laminate (10) can be minimized. Here, the biocarbon content may refer to a value measured according to ASTM D6866.

The film layer (12) may have a tensile strength of 5 MPa or more. Specifically, the tensile strength of the film layer (12) may be 5 to 120 MPa, 10 to 100 MPa, 15 to 80 MPa, 20 to 70 MPa, or 25 to 60 MPa. As the tensile strength of the film layer (12) is within the above range, it has the mechanical strength and stiffness necessary for the processing, so that the processability and manufacturing efficiency of the laminate (10) can be enhanced. Here, the tensile strength may refer to a value measured according to ASTM D882.

The film layer (12) may have a seal strength of 0.5 kgf or more, 0.6 kgf or more, 0.7 kgf or more, 0.8 kgf or more, 0.9 kgf or more, 1.0 kgf or more, 1.1 kgf or more, or 1.2 kgf or more. Specifically, the seal strength of the film layer (12) may be 0.6 to 5 kgf, 0.6 to 3 kgf, 0.7 to 2.5 kgf, 0.7 to 2 kgf, or 0.8 to 1.5 kgf. As the seal strength of the film layer (12) is within the above range, the sealing properties of the laminate (10) are secured, so that the laminate (10) can be used as a packaging material for packaging not only for a short period of time but also for a long period of time. Here, the seal strength may refer to a value measured according to ASTM D882.

The film layer (12) may account for less than 50% by weight of the total weight of the laminate (10). Specifically, the content of the film layer (12) may be 3 to 49.9% by weight, 5 to 45% by weight, 8 to 40% by weight, 15 to 45% by weight, or 10 to 35% by weight, based on the total weight of the laminate (10). As the content of the film layer (12) is within the above range, the recyclability may be excellent while securing the gas barrier properties and sealing properties of the laminate (10).

In addition, the thickness of the film layer (12) is less than 75% of the total thickness of the laminate (10). Specifically, it may be 70% or less, 65% or less, 60% or less, 50% or less, 40% or less, or 30% or less (for example, 1 to 70%, 1 to 60%, 3 to 50%, 5 to 40%, or 7 to 30%). Specifically, the thickness of the film layer (12) may be 8 to 70 µm, 10 to 70 µm, 12 to 55 µm, 20 to 50 µm, or 25 to 45 µm. As the thickness of the film layer (12) is within the above range, the recyclability may be excellent, along with excellent sealing properties and gas barrier properties of the laminate (10).

The film layer (12) may further comprise a functional coating layer as needed. Specifically, if the laminate (10) requires more high barrier properties, thermal insulation properties, and high strength, a functional coating layer formed from a coating composition comprising at least one selected from the group consisting of aluminum (Al), graphene oxide, clay, montmorillonite, cyclodextrin, nanocellulose, cellulose, silicon oxide (SiOₓ), and aluminum oxide (Al₂O₃) may be formed on one or both sides of the film layer (12).

Meanwhile, the laminate (10) according to an embodiment of the present disclosure may further comprise an adhesive layer (13) according to the manufacturing method, which will be described with reference to Fig. 2, as follows.

### Adhesive layer

The laminate (10) according to an embodiment of the present disclosure may further comprise an adhesive layer (13) for bonding the paper layer (11) and the film layer (12) together. Specifically, the adhesive layer (13) is formed between the paper layer (11) and the film layer (12), thereby serving to strongly bond the paper layer (11) and the film layer (12) to each other to increase the processability and usability of the laminate (10).

The adhesive layer (13) may comprise an adhesive material capable of exhibiting high adhesion strength without deteriorating the physical properties of the laminate (10). Specifically, the adhesive layer (13) may comprise at least one adhesive material selected from the group consisting of polyvinyl alcohol (PVA), an ethylene vinyl acetate (EVA) resin, an acrylic resin, a urethane resin, a polyolefin resin, polybutylene succinate (PBS), polybutylene adipate terephthalate (PBAT), and polylactic acid (PLA).

The adhesive layer (13) may have a thickness of 0.5 to 25 µm, 0.6 to 15 µm, or 0.7 to 8 µm. As the thickness of the adhesive layer (13) is within the above range, the processability and usability of the laminate (10) may be increased.

The laminate (10) according to an embodiment of the present disclosure, which comprises the paper layer (11) and the film layer (12) having optimized physical properties as described above, has a tensile strength of 15 to 150 MPa, 20 to 130 MPa, or 30 to 80 MPa. As the tensile strength of the laminate (10) is within the above range, the laminate (10) may exhibit enhanced processability.

The laminate (10) according to an embodiment of the present disclosure may have a seal strength of 0.8 to 10 kgf, 1 to 7 kgf, or 1.1 to 5 kgf. As the seal strength of the laminate (10) is within the above range, the laminate (10) can be advantageously used as a packaging material in various fields.

The laminate (10) according to an embodiment of the present disclosure may have a peel strength (adhesion strength between the paper layer (11) and the film layer (12)) of 80 gf or more, 90 gf or more, 100 gf or more, 150 gf or more, or 200 gf or more (specifically, 100 to 2,000 gf, 300 to 1,000 gf, or 400 to 800 gf). As the peel strength of the laminate (10) is within the above range, the laminate (10) may exhibit enhanced processability. In addition, when the adhesive strength between the paper layer (11) and the film layer (12) is high, the peel strength cannot be measured as the paper layer (11) itself is delaminated. In such a case, the peel strength can be the most excellent.

The laminate (10) according to an embodiment of the present disclosure may have an oxygen transmission rate of 1 to 1,200 cc/m²·day, specifically, 1 to 950 cc/m²·day, 1 to 500 cc/m²·day, or 1 to 300 cc/m²·day. In addition, the laminate (10) according to an embodiment of the present disclosure may have a water vapor transmission rate of 1 to 150 g/m²·day, specifically, 1 to 80 g/m²·day, 1 to 50 g/m²·day, or 1 to 15 g/m²·day. As the oxygen transmission rate and the water vapor transmission rate of the laminate (10) are each within the above ranges, the laminate (10) can be advantageously used as a packaging material in various fields by virtue of its excellent gas barrier properties.

In particular, as the laminate (10) according to an embodiment of the present disclosure comprises a paper layer and a film layer having optimized physical properties, its gas barrier properties to block oxygen and/or moisture may be excellent, even though it does not comprise a barrier layer comprising metal materials or barrier materials such as EVOH, PVA, PVDC, and the like.

The laminate (10) according to an embodiment of the present disclosure may have a total biocarbon content (renewable carbon content (carbon ratio)) of 25% (25 percent modem carbon (pMC)) or more. Specifically, the laminate (10) may have a total biocarbon content of 25 to 100%, 35 to 100%, 50 to 100%, 70 to 100%, or 90 to 100%. As the total biocarbon content of the laminate (10) is within the above range, the emission of carbon dioxide from the laminate is minimized, so that it can be advantageously used as a material for packaging containers or paper boxes that meet the domestic and international carbon emission reduction requirements. Here, the biocarbon content may refer to a value measured according to ASTM D6866.

The laminate (10) according to an embodiment of the present disclosure may have a thickness of 30 to 600 µm, 40 to 500 µm, 50 to 400 µm, or 80 to 300 µm.

As the laminate (10) according to an embodiment of the present disclosure comprises a paper layer and a film layer having optimized physical properties, it may have tensile strength, seal strength, peel strength, or the like to be advantageously used as a packaging material for packaging products in various fields. In addition, since it comprises the paper layer (11) that can be separately disposed of and the film layer (12) having excellent biodegradability in the ocean and soil, and since its total biocarbon content is 25% or more, its recyclability and environmental friendliness can be excellent.

A method of manufacturing the laminate (10) according to an embodiment of the present disclosure is not particularly limited, but it may be prepared by procedures of applying a resin composition (biodegradable resin composition) for forming a film layer on the paper substrate through resin melt coating such as extrusion coating, hot melt coating, or the like, or laminating films using an adhesive.

The resin composition for forming the film layer essentially comprises polyhydroxyalkanoate (PHA), and its coating amount may be 8 to 70 g/m², 15 to 70 g/m², or 25 to 60 g/m². As the coating amount is within the above range, it is possible to form the film layer (12) that satisfies the required gas barrier properties, sealing properties, recyclability, and the like.

In addition, when the resin composition for forming the film layer is extrusion-coated, an appropriate processing temperature of the extruder may be 140 to 240°C, 150 to 220°C, or 160 to 210°C. As the processing temperature of the extruder is within the above range, the film layer (12) can be smoothly formed while preventing degradation of the polyhydroxyalkanoate (PHA) employed in the resin composition for forming the film layer.

### Packaging material

The present disclosure provides a packaging material comprising the laminate. Specifically, the packaging material according to an embodiment of the present disclosure may be the laminate itself as described above or a product obtained by adding various functional layers to the laminate and post-processing them.

The packaging material according to an embodiment of the present disclosure may further comprise a surface coating layer as the functional layer to increase printability and antifouling and water-repellent properties of the packaging material. The surface coating layer may comprise a material having water-soluble properties while exhibiting water resistance. As an example, the surface coating layer may comprise at least one selected from the group consisting of a thermosetting acrylic resin, a urethane resin, and polyhydroxyalkanoate (PHA).

As the packaging material according to an embodiment of the present disclosure comprises the surface coating layer and the laminate, it may have a structure of a surface coating layer, a paper layer, and a film layer, in which an adhesive layer or a primer layer may be interposed between the paper layer and the film layer.

The packaging material according to an embodiment of the present disclosure may be used for packaging various items by itself or may be used for packaging through post-processing. Examples of the post-processing include a process for combining a bubble wrap to increase shock absorbency and a process of molding to a desired shape (e.g., extrusion molding, injection molding, compression molding, pressure molding, blowing or blow molding, thermoforming, or the like).

As the packaging material according to an embodiment of the present disclosure comprises a laminate comprising the paper layer and film layer as described above, it has excellent recyclability and biodegradability as well as seal strength, peel strength, and gas barrier properties. Therefore, it can be advantageously used for packaging various items such as food, medicine, cosmetics, and industrial products that require not only short-term sealing properties but also long-term sealing properties.

Specifically, the packaging material according to an embodiment of the present disclosure may be used as food packaging materials such as coffee, cup rice, dried fish, and retort; mask packaging material; cosmetic packaging materials; pharmaceutical packaging materials; or as a packaging material for paper packs such as milk cartons. As an example, the packaging material according to an embodiment of the present disclosure may have a shape of a paper container, a two-side seal pouch, a three-side seal pouch, an M-side seal pouch, a box pouch (flat bottom pouch), a stick-type pouch, or the like.

### Mode for the Invention

Hereinafter, the present disclosure will be described in detail with reference to Examples, but the scope of the present disclosure is not limited to the Examples.

### <Preparation of a laminate>

### Example 1

A resin composition for forming a film layer comprising polyhydroxyalkanoate (CJ CheilJedang, containing 28% by weight of a 4HB repeat unit (Poly(3HB)-co-(4HB)) and polylactic acid (PLA of NatureWorks) at a PLA:PHA weight ratio of 6:4 was extrusion-coated (extruder temperature 200°C or lower) onto a paper substrate (thickness: 350 ± 15 µm) with a biocarbon content of 95% or more (95 pMC or more), a tensile strength of 50 MPa, a tear strength of 200 gf, and a basis weight of 280 g/m² to form a film layer with a tensile strength of 25 MPa and a seal strength of 0.6 kgf (thickness: 40 µm). A laminate having a total biocarbon content of 96% or more (96 pMC or more) was prepared through the above procedure. Here, the tensile strength and seal strength of the paper substrate and the film layer were measured using an Instron 34SC-1 universal testing machine.

### Examples 2 to 4

A laminate was prepared in the same manner as in Example 1, except that the physical properties and composition of the paper substrate and the film layer were adjusted as shown in Table 1 below.

### Comparative Examples 1 to 6

A laminate was prepared in the same manner as in Example 1, except that the physical properties and composition of the paper substrate and the film layer were adjusted as shown in Table 2 below. Here, poly(3-hydroxybutyrate) (Poly(3HB)) was adopted as the PHA in the film layer of Comparative Example 1.

**[Table 1]**

| | | Ex. 1 | Ex. 2 | Ex. 3 | Ex. 4 |
|---|---|---|---|---|---|
| Paper substrate (Paper layer) | Biocarbon content (%) | ≥ 95 | ≥ 95 | ≥ 95 | ≥ 95 |
| | Tensile strength (MPa) | 50 | 50 | 70 | 50 |
| | Tear strength (gf) | 200 | 200 | 250 | 200 |
| | Basis weight (g/m²) | 280 | 280 | 300 | 280 |
| | Thickness (µm) | 350 ± 15 | 350 ± 15 | 375 ± 15 | 350 ± 15 |
| Film layer | Biocarbon content (%) | ≥ 98 | ≥ 98 | ≥ 98 | ≥ 98 |
| | Tensile strength (MPa) | 25 | 25 | 25 | 55 |
| | Seal strength (kgf) | 0.6 | 0.6 | 0.6 | 1.2 |
| | Ratio of 4HB repeat unit (wt. %) in PHA (Poly(3HB)-co-(4HB)) | 28 | 10 | 28 | 17 |
| | PLA:PHA weight ratio | 6:4 | 6:4 | 6:4 | 0:10 (PHA alone) |
| | Thickness (µm) | 40 | 70 | 40 | 50 |
| Laminate | Total biocarbon content (%) | ≥ 96 | ≥ 97 | ≥ 96 | ≥ 96 |

**[Table 2]**

| | | C. Ex. 1 | C. Ex. 2 | C. Ex. 3 | C. Ex. 4 | C. Ex. 5 | C. Ex. 6 |
|---|---|---|---|---|---|---|---|
| Paper substrate (Paper layer) | Biocarbon content (%) | ≥ 95 | ≥ 95 | ≥ 95 | ≥ 95 | ≥ 95 | ≥ 95 |
| | Tensile strength (MPa) | 50 | 6.5 | 50 | 50 | 50 | 50 |
| | Tear strength (gf) | 200 | 10 | 200 | 200 | 200 | 200 |
| | Basis weight (g/m²) | 280 | 30 | 280 | 280 | 280 | 280 |
| | Thickness (µm) | 350 ± 15 | 34.5 ± 7.5 | 350 ± 15 | 350 ± 15 | 350 ± 15 | 350 ± 15 |
| Film layer | Biocarbon content (%) | ≥ 98 | ≥ 98 | ≥ 98 | ≥ 98 | ≥ 98 | ≥ 98 |
| | Tensile strength (MPa) | 25 | 25 | - | 15 | 25 | 52 |
| | Seal strength (kgf) | 0.4 | 0.6 | - | 0.8 | 0.4 | 0.3 |
| | Ratio of 4HB repeat unit (wt%) in PHA (Poly(3HB)-co-(4HB)) | 0 | 28 | 65 | 55 | 28 | - |
| | PLA:PHA weight ratio | 6:4 | 6:4 | 6:4 | 4:6 | 6:4 | 10:0 (PLA alone) |
| | Thickness (µm) | 70 | 40 | 40 | 40 | 6 | 40 |
| Laminate | Total biocarbon content (%) | ≥ 97 | ≥ 97 | ≥ 96 | ≥ 96 | ≥ 96 | ≥ 96 |

### <Test Example>

### Test Example 1: Processability of packaging materials

To determine whether it can be processed into a packaging material, it was checked whether or not the resin composition for forming a film layer (biodegradable resin) could be extruded to form a layer, and the laminate could be processed through printing, slitting, and bagging. Specifically, in the case of extrusion to form a layer, the possibility of forming a film layer of the resin composition, the number of gels in the film layer, and the possibility of forming a thickness usable as a packaging material were evaluated. For the laminate, whether or not the laminate was broken during the processing of printing, slitting, and bagging, and whether or not there was a defect due to shrinkage or poor cutting were evaluated.

If the evaluation result was passed, it was evaluated as ∘. If it failed due to physical properties, it was evaluated as ×. The results are shown in Table 3 below.

### Test Example 2: Seal strength

The seal strength of the laminate was measured using an Instron 34SC-1 universal testing machine with a sample width of 15 mm, a measurement length of 30 mm, and a measurement speed of 200 mm/minute.

When the measured seal strength was 0.8 kgf or more, it was evaluated as ∘. When it was less than 0.8 kgf, it was evaluated as ×. The results are shown in Table 3 below.

### Test Example 3: Peel strength

The peel strength between the paper layer and the film layer of the laminate was measured using an Instron 34SC-1 universal testing machine with a sample width of 15 mm, a measurement length of 30 mm, and a measurement speed of 200 mm/minute.

When the measured peel strength is 200 gf or more, or if the adhesive strength between the paper layer and the film layer was strong, so that the paper layer was broken as delaminated, making it impossible to measure the peel strength, it was evaluated as ∘. When it was less than 200 gf, it was evaluated as ×. The results are shown in Table 3 below.

### Test Example 4: Gas barrier properties

The water vapor transmission rate (WVTR) of the laminate was measured at 38 ± 0.5°C and 90 ± 2% relative humidity using a Permatran-w3/33 water vapor transmission rate meter of Mocon. In addition, the oxygen transmission rate (OTR) of the laminate was measured at 23 ± 0.5°C using an OX2-TRAN 2/12 oxygen transmission rate meter of Mocon.

When the measured oxygen transmission rate was 1,200 cc/m²·day or less and the water vapor transmission rate was 150 g/m²·day or less, it was evaluated as ∘. When the measured oxygen transmission rate exceeded 1,200 cc/m²·day and the water vapor transmission rate exceeded 150 g/m²·day, it was evaluated as ×. The results are shown in Table 3 below.

**[Table 3]**

| | Processability for packaging materials | Seal strength | Peel strength | Gas barrier properties |
|---|---|---|---|---|
| Ex. 1 | ○ | ○ | ○ | ○ |
| Ex. 2 | ○ | ○ | ○ | ○ |
| Ex. 3 | ○ | ○ | ○ | ○ |
| Ex. 4 | ○ | ○ | ○ | ○ |
| C. Ex. 1 | × | × | ○ | ○ |
| C. Ex. 2 | × | × | ○ | ○ |
| C. Ex. 3 | × | Not measurable | Not measurable | Not measurable |
| C. Ex. 4 | ○ | ○ | ○ | × |
| C. Ex. 5 | ○ | × | × | × |
| C. Ex. 6 | ○ | × | ○ | × |

Referring to Table 3, the laminates of Examples 1 to 4 according to the present disclosure had a paper layer with high recyclability and a film layer with biodegradability (not comprising components such as petrochemical synthetic resins and aluminum), so that they are separately disposable, excellent in environmental friendliness, while securing processability into a packaging material, seal strength, peel strength, and gas barrier properties required as a packaging material.

In contrast, in the laminates of Comparative Examples 1 to 6, it was impossible to form a film itself (Comparative Example 3), or the physical properties were remarkably low even after extrusion coating of the resin composition for forming a film layer onto a paper substrate, making it difficult to be processed into packaging materials or to be used for packaging food, cosmetics, or the like.

These results support the fact that, in manufacturing a laminate comprising a paper layer and a film layer, it is necessary to optimize the biocarbon content and physical properties of each of the paper layer and the film layer, as in the present disclosure.

### [Explanation of Reference Numerals]

10: laminate
11: paper layer
12: film layer
13: adhesive layer

## Claims

1. A laminate, which comprises a paper layer; and a film layer, wherein the paper layer has a biocarbon content of 85% or more and a tensile strength of 8 MPa or more,
the film layer comprises polyhydroxyalkanoate (PHA) and has a thickness of 8 to 70 µm,
the polyhydroxyalkanoate (PHA) is a homopolymer comprising a repeat unit derived from a monomer selected from the group consisting of 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO), or a copolymer comprising at least one repeat unit derived from a monomer selected from the group consisting of 3-hydroxybutyrate (3HB), 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO), the at least one repeat unit is employed in an amount of 0.1 to 50% by weight, and
the thickness of the film layer is less than 75% of the total thickness of the laminate.

2. The laminate of claim 1, wherein the polyhydroxyalkanoate (PHA) is a copolymer, which comprises a first repeat unit and a second repeat unit, each being derived from a monomer selected from the group consisting of 3-hydroxybutyrate (3HB), 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO), and the first repeat unit and the second repeat unit are different from each other.

3. The laminate of claim 2, wherein the polyhydroxyalkanoate (PHA) is a copolymer comprising 0.1 to 50% by weight of the first repeat unit or the second repeat unit based on the total weight of the polyhydroxyalkanoate (PHA).

4. The laminate of claim 2, wherein the polyhydroxyalkanoate (PHA) is a copolymer, which comprises 50 to 99.9% by weight of the first repeat unit derived from 3-hydroxybutyrate (3HB) and 0.1 to 50% by weight of the second repeat unit derived from a monomer selected from the group consisting 3-hydroxypropionic acid (3HP), 4-hydroxybutyrate (4HB), 3-hydroxyvalerate (3HV), 5-hydroxyvalerate (5HV), 3-hydroxyhexanoate (3HH), 6-hydroxyhexanoate (6HH), and 3-hydroxyoctanoate (3HO).

5. The laminate of claim 1, wherein the film layer has a biocarbon content of 40% or more.

6. The laminate of claim 1, wherein the laminate has an oxygen transmission rate of 1 to 1,200 cc/m²·day and a water vapor transmission rate of 1 to 150 g/m²·day.

7. The laminate of claim 1, wherein the film layer has a tensile strength of 5 MPa or more and a seal strength of 0.5 kgf or more.

8. The laminate of claim 1, wherein the film layer further comprises at least one selected from the group consisting of polylactic acid (PLA), polybutylene adipate terephthalate (PBAT), polybutylene succinate (PBS), thermoplastic starch (TPS), polyvinyl alcohol (PVA), polycaprolactone (PCL), bio-derived polyethylene, and bio-derived polypropylene.

9. The laminate of claim 1, wherein the polyhydroxyalkanoate (PHA) is a poly(3-hydroxybutyrate-co-4-hydroxybutyrate) copolymer.

10. The laminate of claim 1, wherein the polyhydroxyalkanoate (PHA) has an average molecular weight of 30,000 to 1,000,000 g/mol.

11. The laminate of claim 1, wherein the paper layer has a tensile strength of 8 to 100 MPa, a tear strength of 20 to 600 gf, and a basis weight of 30 to 350 g/m².

12. The laminate of claim 1, wherein the laminate has a peel strength of 200 gf or more.

13. The laminate of claim 1, wherein the laminate has a total biocarbon content of 25% or more.

14. A packaging material, which comprises the laminate of any one of claims 1 to 13.
